# EUROPEAN PATENT SPECIFICATION

(11) **EP 3 199 028 B1**
(45) Date of publication and mention of the grant of the patent: **02.10.2019**
(21) Application number: 17152690.8
(22) Date of filing: 23.01.2017
(51) Int. Cl.: A21C 5/00, A21C 9/08

(54) **A SYSTEM AND A METHOD FOR WEIGHING AND CUTTING CONTINUOUS FOOD DOUGH**
SYSTEM UND VERFAHREN ZUM WIEGEN UND SCHNEIDEN VON KONTINUIERLICHEM LEBENSMITTELTEIG
SYSTÈME ET PROCÉDÉ PERMETTANT DE PESER ET DE COUPER DE LA PÂTE ALIMENTAIRE CONTINUE

(30) Priority: 27.01.2016 JP 2016013835
(43) Date of publication of application: 02.08.2017
(60) Divisional application: 19172890.6
(73) Proprietor: Rheon Automatic Machinery Co., Ltd., Utsunomiya-shi, Tochigi 320-0071 (JP)
(72) Inventor: Ueno, Hiroshi, Utsunomiya-shi, Tochigi (JP)
(74) Representative: Thum, Bernhard

(56) References cited:
- EP-A1- 2 143 333
- EP-A1- 2 314 166
- EP-A2- 2 020 183
- WO-A1-99/06796
- US-A- 4 794 996
- US-A1- 2004 076 725

## Description

### Technical Field

This invention relates to a system and a method for weighing continuous food dough, such as bread dough carried by a conveyor, and for cutting it by a targeted cutting weight.

### Background of the Invention

Conventionally, a system for weighing and cutting food dough comprised of an inlet conveyor for carrying forward continuous food dough, a first weighing conveyor and a second weighing conveyor sequentially disposed adjacent to and at a downstream side of, the inlet conveyor, a cutting apparatus disposed above a position between the inlet conveyor and the first weighing conveyor, and a controller for controlling movements of those apparatuses, is well known (for example, see document JP 2001 / 231 432 or EP 2 020 183).

In this system for weighing and cutting food dough, when the weight of the continuous food dough measured by the first and the second weighing conveyors reaches a predetermined cutting weight corresponding to a targeted cutting weight, the controller transmits a signal to the cutting apparatus, and then the cutting apparatus is driven. Accordingly, pieces are cut from the continuous food dough.

Then, the pieces of the food dough are carried onto the second weighing conveyor, and the actual weights of the pieces are measured. If the actual weights of the pieces differ from the targeted cutting weight, the controller corrects the predetermined cutting weight based on the difference of the weights, and sets a new predetermined cutting weight.

Thus, in the conventional system for weighing and cutting food dough, due to the correction, the pieces of the food dough having a weight close to the targeted cutting weight can be cut.

Devices and methods for cutting and weighing food dough are further known from EP 2 314 166, US 2004 / 0 076 725 and EP 2 143 333. Furthermore, a method and an apparatus for determining the topographical surface shape of a bulk meat product with a weighing conveyor is known from WO 99 / 06796. In addition, from US 4 794 996 an automatic slicing machine comprising a weigher conveyor is known.

### Summary of the Invention

However, in the conventional system for weighing and cutting food dough, since the actual weights of the pieces are measured only by the second weighing conveyor, and further, the actual weights of the pieces are measured while the pieces are carrying forward, the length of the piece is limited due to the relationship between the length of the conveying surface of the second weighing conveyor and the range of the movement of the piece. Thus, longer pieces cannot be cut by the conventional system.

The purpose of this invention is to provide a system and a method for weighing and cutting continuous food dough that can cut out longer and/or heavier pieces from the continuous food dough, and further, can improve weighing precision of the pieces of the food dough.

To achieve the purpose, the system has the following features:
the system for weighing continuous food dough and for cutting it into pieces having a targeted weight, wherein the system comprising:
   an inlet conveyor for carrying forward the continuous food dough,
   a weighing conveyor device disposed adjacent to and at a downstream side of, the inlet conveyor,
   a cutting apparatus for cutting out the pieces from the continuous food dough, and
   a controller connected to the inlet conveyor, the weighing conveyor device, and the cutting apparatus,
wherein the weighing conveyor device has a first weighing conveyor and a second weighing conveyor disposed adjacent to and at a downstream side of, the first weighing conveyor, and
wherein the controller is configured to measure a weight of the continuous food dough being carried forward by the first and the second weighing conveyors, and is further configured to measure, by means of the first and the second weighing conveyors, an actual weight of the piece of the food dough cut out from the continuous food dough.

In an embodiment of this invention, preferably, the controller is configured to stop the inlet conveyor, and the first and the second weighing conveyors when the cutting apparatus is operated.

In an embodiment of this invention, preferably, the controller is configured to stop the first and the second weighing conveyors when the actual weight of the piece of the food dough is measured.

In an embodiment of this invention, preferably, the controller is configured to stop the first and the second weighing conveyors when an upstream end of the piece of the food dough reaches to a boundary at an upstream side of the first weighing conveyor.

In an embodiment not belonging to this invention, preferably, the controller is configured to set a threshold value for being compared with a length of the piece cut out from the continuous food dough, and controls to switch the system, wherein, if the length of the piece is longer than the threshold value, the actual weight of the piece of the food dough is measured by the first and the second weighing conveyors, and if the length of the piece is shorter than the threshold value, the actual weight of the piece of the food dough is measured by the second weighing conveyor.

In an embodiment of this invention, preferably, the cutting apparatus is disposed above a downstream end of the inlet conveyor, or a position between the inlet conveyor and the weighing conveyor device.

In an embodiment of this invention, preferably, the controller is configured to correct a predetermined cutting weight based on the actual weight of the piece of the food dough.

In an embodiment of this invention, preferably, the controller is configured to drive the cutting apparatus based on the result of comparing the sum of the weights measured by the first and the second weighing conveyors with the predetermined cutting weight corresponding to the targeted cutting weight, or drives it with a predetermined time interval.

In an embodiment of this invention, preferably, a plurality of the weighing conveyor devices having a set of the first and the second weighing conveyors are disposed in parallel in a transverse direction perpendicular to the carrying direction of the food dough.

To further achieve the purpose, a method has the following features:
the method for weighing continuous food dough and for cutting it into pieces, using a system for weighing and cutting continuous food dough, wherein the system has:
   an inlet conveyor for carrying forward the continuous food dough,
   a weighing conveyor device disposed adjacent to and at a downstream side of, the inlet conveyor, and
   a cutting apparatus for cutting out the pieces from the continuous food dough, wherein the cutting apparatus is disposed at an upstream side of the weighing conveyor device,
wherein the weighing conveyor device has a first weighing conveyor and a second weighing conveyor disposed adjacent to and at a downstream side of, the first weighing conveyor;
the method comprising:
   a step (1) for carrying the continuous food dough onto the first and the second weighing conveyors by driving the inlet conveyor, and the first and the second weighing conveyors,
   a step (2) for weighing the continuous food dough by the first and the second weighing conveyors,
   a step (3) for cutting out a piece from the continuous food dough by the cutting apparatus based on a measured weight of the continuous food dough, and
   a step (4) for weighing, by means of the first and the second weighing conveyors, an actual weight of the piece cut out from the continuous food dough.

In an embodiment of this invention, preferably, the method comprises:
As substitute for the step (3), a step (3a) for cutting out a piece from the continuous food dough by the cutting apparatus based on a measured weight of the continuous food dough, while stopping the movement of the inlet conveyor, and the first and the second weighing conveyors.

In an embodiment of this invention, preferably, the method comprises:
As substitute for the step (4), a step (4a) for weighing an actual weight of the piece cut out from the continuous food dough by the first and the second weighing conveyors, while stopping the movement of the inlet conveyor, and the first and the second weighing conveyors.

In an embodiment of this invention, preferably, the first and the second weighing conveyors are stopped when an upstream end of the piece of the food dough reaches to a boundary at an upstream side of the first weighing conveyor.

In an embodiment not belonging to this invention, preferably, the step (4) further includes features for setting a threshold value for being compared with a length of the piece cut out from the continuous food dough, and for switching the system, wherein, if the length of the piece is longer than the threshold value, the actual weight of the piece of the food dough is measured by the first and the second weighing conveyors, and if the length of the piece is shorter than the threshold value, the actual weight of the piece of the food dough is measured by the second weighing conveyor.

### Effect of the Invention

The system and the method for weighing and cutting the continuous food dough of this invention can cut out the longer and/or heavier pieces from the continuous food dough compared to the conventional system and method, and further can improve weighing precision of the pieces of the food dough.

### Brief Description of the Drawings

Fig. 1 shows a schematic view of the system for weighing and cutting the continuous food dough of this invention.
Fig. 2 shows a schematic view of a main part of the system for weighing and cutting the continuous food dough of this invention.
Fig. 3 shows a schematic view of a main part of the system for weighing and cutting the continuous food dough of this invention.
Fig. 4 shows a view of a variation of the cutting apparatus of this invention.
Fig. 5 shows a view of a variation of the cutting apparatus of this invention.
Fig. 6 shows a schematic view of a variation of the system for weighing and cutting food dough of this invention.
Fig. 7 shows a schematic view of a variation of the main part of the system for weighing and cutting the continuous food dough of this invention.
Fig. 8 shows a schematic view of a variation of the main part of the system for weighting and cutting food dough of this invention.

### Preferred Embodiments of the Invention

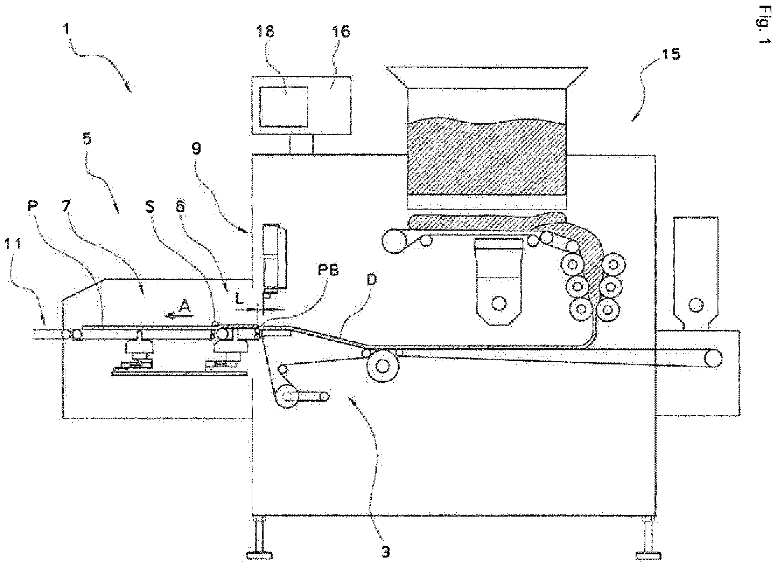

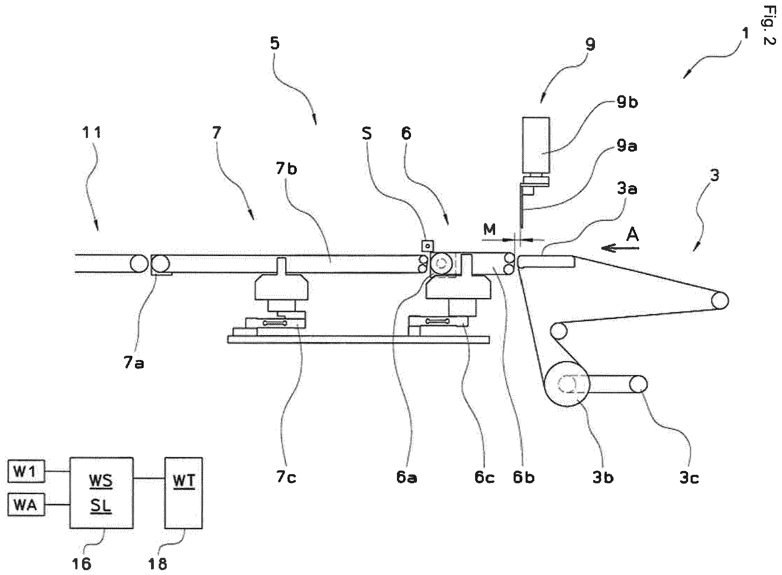

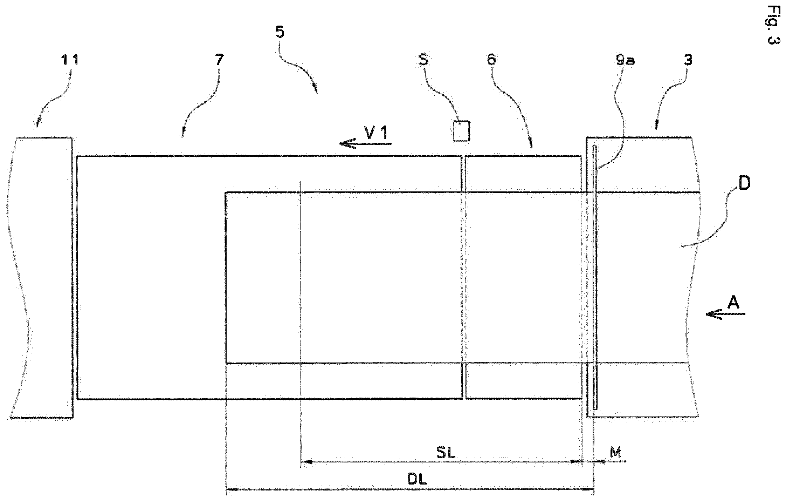

Below, embodiments of the system and the method for weighing and cutting continuous food dough of this invention are explained based on Figs. 1-3. The system 1 for weighing and cutting food dough of this invention, wherein continuous food dough D is cut into pieces P having a targeted weight, includes an inlet conveyor 3 for carrying forward the continuous food dough D, a weighing conveyor device 5 disposed adjacent to and at a downstream side of, the inlet conveyor 3, and a cutting apparatus 9 disposed above a downstream end 3a of the inlet conveyor 3. Preferably, the system 1 further includes a feeding apparatus 15 of food dough disposed adjacent to and at an upstream side of, the inlet conveyor 3, and an outlet conveyor 11 disposed adjacent to and at a downstream side of, the weighing conveyor device 5.

The weighing conveyor device 5 has a first weighing conveyor 6, and a second weighing conveyor 7 disposed adjacent to and at a downstream side of, the first weighing conveyor 6.

The inlet conveyor 3 is a conveyor belt for carrying forward the continuous food dough D supplied by the feeding apparatus 15 of the food dough, and has a driving motor 3b. In this embodiment, a forward-movement velocity V1 of the inlet conveyor 3 is variable. Further, the inlet conveyor 3 can be intermittently driven so as to repeat a forward movement and halt condition. The inlet conveyor 3 also has an encoder 3c generating pulses corresponding to a distance of conveyance of the continuous food dough.

The first weighing conveyor 6 is a conveyor belt for weighing the food dough, and has a conveying member 6b having a driving motor 6a, and a load cell 6c supporting the conveying member 6b. The velocity of the first weighing conveyor 6 can be switched to a forward-movement velocity V1 equal to the velocity of the inlet conveyor 3, or to a moving-out velocity V2 greater than the forward-movement velocity V1. The length of the first weighing conveyor 6 is 15 cm, for example.

The second weighing conveyor 7 is a conveyor belt for weighing the food dough, and has a conveying member 7b having a driving motor 7a, and a load cell 7c supporting the conveying member 7b. The velocity of the second weighing conveyor 7 can be switched to a forward-movement velocity V1 equal to the velocity of the inlet conveyor 3, to a moving-out velocity V2 greater than the forward-movement velocity V1, or to a low-moving-out velocity VL less than the moving-out velocity V2. It is preferable that the length of the second weighing conveyor 7 is longer than that of the first weighing conveyor 6. The length of the second weighing conveyor 7 is 50 cm, for example.

Further, the second weighing conveyor 7 has a sensor S as a detecting device to detect the food dough, wherein the sensor S is disposed at the lateral side of the upstream end (boundary) of the second weighing conveyor 7.

In this embodiment, the cutting apparatus 9 is disposed at the downstream end 3a of the inlet conveyor 3, and is configured for cutting the continuous food dough D. In particular, the cutting apparatus 9 has a cutter blade 9a disposed along the direction perpendicular to the carrying direction A of the food dough, and a driving device 9b for vertically driving the cutter blade 9a. In the embodiment shown in the drawings, the driving device 9b has an air cylinder 9b driven by compressed air and an electromagnetic valve (not shown) connected to the air cylinder. The driving device 9b may be driven by an electric motor.

The feeding apparatus 15 supplies the continuous food dough D on the inlet conveyor 3 with the speed corresponding to the forward-movement velocity V1 of the inlet conveyor 3. The feeding apparatus 15 is not limited to one shown by the drawings. Other well-known feeding apparatus may also be used.

The outlet conveyor 11 is a conveyor belt for carrying forward the pieces P of the food dough carried from the second weighing conveyor 7. In this embodiment, the velocity of the outlet conveyor 11 is equal to the moving-out velocity V2 of the second weighing conveyor 7.

The system 1 for weighing and cutting food dough further has a controller 16 and an input device 18, such as an operating panel. The controller 16 is connected to the feeding apparatus 15, the inlet conveyor 3, the weighing conveyor device 5 (the first weighing conveyor 6 and the second weighing conveyor 7), the cutting apparatus 9, the outlet conveyor 11, and the input device 18. The controller 16 calculates distances and positions of conveyance of the continuous food dough D and the pieces P of the food dough by using the encoder 3c. In this embodiment, the encoder 3c is the detecting device. Further, controller 16 calculates distances and positions of conveyance of the pieces P of the food dough based on the velocities and the conveying time of the first weighing conveyor 5 and the second weighing conveyor 7

The controller 16 calculates a distance of conveyance DL of the continuous food dough D along the direction of movement A of the continuous food dough D, wherein the continuous food dough D is carried from the position below the cutter blade 9a of the cutting apparatus 9 onto the first weighing conveyor 6 or onto the second weighing conveyor 7, based on a number of the pulses generated by the encoder 3c of the inlet conveyor 3.

The controller 16 sets the distance of conveyance DL, the distance when the signal for driving the cutting apparatus 9 is transmitted, as a length PCL of the piece P of the food dough, a length along the direction of movement A of the continuous food dough D. In the controller 16, a threshold value SL regarding the length PCL is set. The controller 16 can switch the movement of each component by comparing the length PCL with the threshold value SL. The threshold value SL is set so that it is longer than the length of the first weighing conveyor 6, and is shorter than the sum of the lengths of the first weighing conveyor 6 and the second weighing conveyor 7. For example, the threshold value SL is 330mm. In an embodiment not belonging to the invention, if the length PCL is shorter than the threshold value SL, the sensor S detects passing of the piece P of the food dough, then the actual weight WA of the piece P is measured by the second weighing conveyor 7 while it is carrying the piece P.

The operation of the system 1 for weighing and cutting continuous food dough is explained.

The targeted cutting weight WT is input by the input device 18. The controller 16 drives the inlet conveyor 3, the first weighing conveyor 6, and the second weighing conveyor 7, at the forward-movement velocity V1, and carries forward the continuous food dough D from the inlet conveyor 3 to the first weighing conveyor 6 and the second weighing conveyor 7. When the weight W1 measured by the first weighing conveyor 6 and the second weighing conveyor 7 reaches the predetermined cutting weight WS corresponding to the targeted cutting weight WT, the signal is transmitted to the cutting apparatus 9, and the cutting apparatus 9 is driven. The piece P is cut out from the continuous food dough D.

At the time of cutting, preferably, the controller 16 may stop the movements of the inlet conveyor 3, and the first weighing conveyor 6 and the second weighing conveyor 7 by transmitting signals to them. This process can prevent the weight W1 from increasing because the continuous food dough D moves excessively across the cutting apparatus 9, during a period from when the signal for stopping the cutting apparatus 9 is transmitted to it till when the continuous food dough D is actually cut. Thus, this process can improve weighing precision of the pieces P of the food dough (can suppress variation of the weights to low levels).

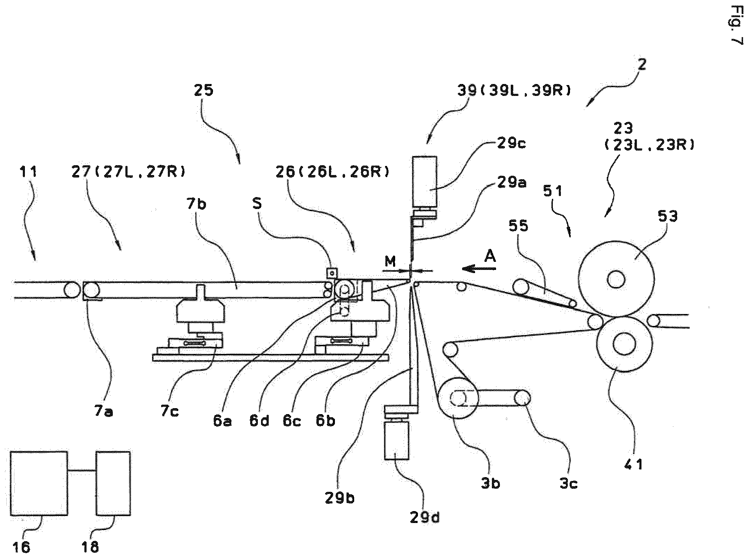

The controller 16 drives the first weighing conveyor 6 and the second weighing conveyor 7 so that the piece P of the food dough is carried forward with a moving distance L and then stopped, based on the velocity and the carrying time of those weighing conveyors. At that time, the upstream end PB of the piece P of the food dough reaches to the upstream end (boundary) of the first weighing conveyor 6. Accordingly, the piece P of the food dough is placed on the first weighting conveyor 6 and the second weighing conveyor 7. The moving distance L is equal to or greater than an interval M, along the carrying direction A of the food dough, between the upstream end (boundary) of the first weighing conveyor 6 and the position below the cutting apparatus 9 (the cutter blade 9a), and is predetermined in the controller 16. The moving distance L can be calculated by connecting the encoder (6d in Fig. 7) to the first weighing conveyor 6.

Then, the actual weight WA of the piece P is measured as a sum of measurements of the first weighing conveyor 6 and the second weighing conveyor 7, while stopping the movement of the first weighing conveyor 6 and the second weighing conveyor 7. The difference between the targeted cutting weight WT and the predetermined cutting weight WS is the weight that the first weighing conveyor 6 has not detected, including a weight of a part of the continuous food dough D placed from the boundary between the inlet conveyor 3 and the first weighing conveyor 6 to the position of the cutting apparatus 9.

The predetermined cutting weight WS is adjusted by a feedback control using the actual weight WA of the piece P measured by the first weighing conveyor 6 and the second weighing conveyor 7. In this feedback control, the controller 16 corrects the predetermined cutting weight WS based on the actual weight WA of the piece P of the food dough. Particularly, the mean value of the actual weights WA of the pieces P is calculated. If the actual weight WA differs from the targeted cutting weight WT, the actual weight WA becomes closer to the targeted cutting weight WT by correcting the predetermined cutting weight WS. For example, if the mean value of the actual weights WA is greater than the targeted cutting weight WT, the predetermined cutting weight WS is set smaller. The correction may be done for each piece P based on the difference obtained by comparing each actual weight WA with the targeted cutting weight WT.

After the actual weight WA of the piece P of the food dough is measured, the first weighing conveyor 6, the second weighing conveyor 7, and the outlet conveyor 11 are driven at the moving-out velocity V2 greater than the forward-movement velocity V1, and the cut piece P of the food dough is removed from the first weighing conveyor 6, to prepare next cutting procedure of the continuous food dough D.

After the upstream end PB of the cut piece P of the food dough reaches onto the second weighing conveyor 7, the velocity of the first weighing conveyor 6, the second weighing conveyor 7 and the outlet conveyor 11 is reset to the forward-movement velocity V1, and the continuous food dough D is moved forward to the first weighing conveyor 6, while driving the inlet conveyor 3 at the forward-movement velocity V1. It is preferable that, when the continuous food dough D is moved onto the first weighing conveyor 6, the previous piece P of the food dough has been moved away from the second weighing conveyor 7 to the outlet conveyor 11.

As easily understandable from the above explanation, the first weighing conveyor 6 and the second weighing conveyor 7 of the embodiment of this invention are driven so as to measure weights of the continuous food dough D and the pieces P of the food dough in cooperation with each other. Namely, the system for weighting and cutting the food dough of this invention differs from a conventional system, in which only the second weighing conveyor measures the actual weights of the pieces P of the food dough.

Since the actual weights WA of the pieces P of the food dough are measured while stopping the first weighing conveyor 6 and the second weighing conveyor 7, the lengths of the pieces P along the carrying direction A of the food dough can be set up to the length corresponds to the distance (for example, 650mm) between the upstream end (boundary) of the first weighing conveyor 6 and the downstream end (boundary) of the second weighing conveyor 7. Thus, for example, the system 1 of this invention can cut the pieces P of the food dough having the length about 650mm, and the lengths of the pieces P of the food dough of this invention can be longer than the lengths about 330mm of the pieces cut by the conventional system. Further, for example, the system 1 of this invention can cut the pieces P of the food dough having the weight about 3.5kg, the weights of the pieces P of the food dough of this invention can be heavier than the pieces cut by the conventional system having the weight about 1.6kg.

It goes without saying that the scope of this invention is not limited to the embodiment discussed above. Further, it is possible to modify the invention within the scope of the invention defined in claims, and such modification should be included in the scope of the invention.

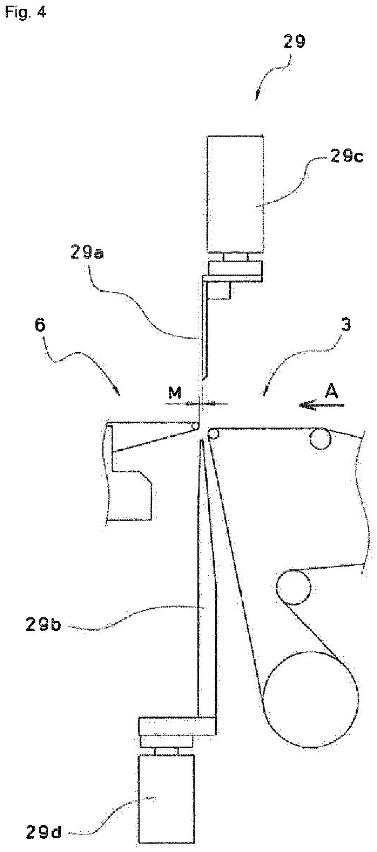

In the embodiment discussed above, the cutting apparatus 9 is disposed at the downstream end of the inlet conveyor 3. However, as a variation of the cutting apparatus shown in Fig. 4, the variation of the cutting apparatus 29 can be disposed between the inlet conveyor 3 and the first weighing conveyor 6.

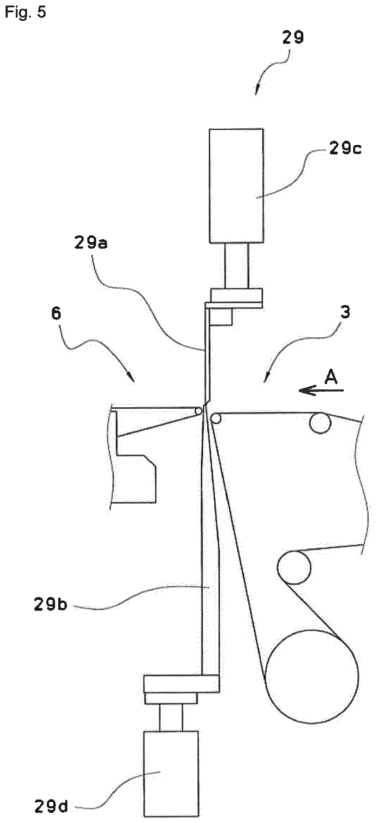

As shown in Figs. 4 and 5, the cutting apparatus 29 has an upper-cutter-blade 29a and a lower cradle 29b disposed along the direction perpendicular to the carrying direction A of the continuous food dough and disposed above and below the continuous food dough, respectively. Further, the cutting apparatus 29 has driving devices 29c and 29d for vertically driving the upper-cutter-blade 29a and the lower cradle 29b, respectively. In the embodiment shown in the drawings, the driving devices 29c and 29d have air cylinders 29c and 29d driven by compressed air, and electromagnetic valves (not shown) connected to the air cylinders 29c and 29d. When the cutting apparatus 29 is driven, the upper-cutter-blade 29a descends from the position above the continuous food dough D, and the lower cradle 29b ascends from the position below the continuous food dough D. Then, the distal portion of the upper-cutter-blade 29a and the distal portion of the lower cradle 29b are contacted at or near, the position of the continuous food dough D. Accordingly, the piece P of the food dough is cut out from the continuous food dough D (see Fig. 5). Then, the piece P of the food dough is carried forward with a moving distance L, and the actual weight WA of the piece P is measured.

In this variation, it is preferable that a height of a carrying surface of the first weighing conveyor 6 is higher than that of the inlet conveyor 3. For example, it is preferable that the height of a carrying surface of the first weighing conveyor 6 is 3mm higher than that of the inlet conveyor 3. Further, it is preferable that the position where the distal portion of the upper-cutter-blade 29a contacts the distal portion of the lower cradle 29b is at a position higher than the carrying surface of the first weighing conveyor 6. For example, it is preferable that the contacting position is 1.5mm higher than the carrying surface of the first weighing conveyor 6. This constitution can reduce a distance between the first weighing conveyor 6 and the cutting apparatus 29, can minimize a quantity of the food dough that is not laid on
the first weighing conveyor 6 when the continuous food dough D is cut, and can consequently improve weighing precision of the pieces of the food dough.

Denotation M shown in Fig. 4 means an interval between the upstream end (boundary) of the first weighting conveyor 6 and the cutting apparatus 29 (the upper-cutter-blade 29a). It is preferable that the moving distance L is equal to or a little longer than the interval M. Consequently, since the weight of the piece P of the food dough is loaded on the first weighing conveyor 6 and the second weighing conveyor 7, the actual weight WA of the piece P is precisely measured.

Further, in the embodiment explained in the above paragraphs, the system for weighing and cutting the food dough is composed of one unit of the inlet conveyer 3, the weighing conveyor device 5 (the first weighing conveyor 6 and the second weighing conveyor 7), and the cutting apparatus 9. However, a plurality of the inlet conveyors, the weighing conveyor devices, and the cutting apparatuses may be disposed in parallel with each other in the transverse direction. In this case, a plurality of the weighing conveyor devices, wherein the weighing conveyor device is composed of a set of the first and the second weighing conveyors, are disposed in parallel with each other in the transverse direction. Further, in this embodiment, the feeding apparatus has a dividing and separating apparatus for dividing the continuous food dough into a plurality of the continuous food dough corresponding to the number of the first weighing conveyors, near the inlet conveyor.

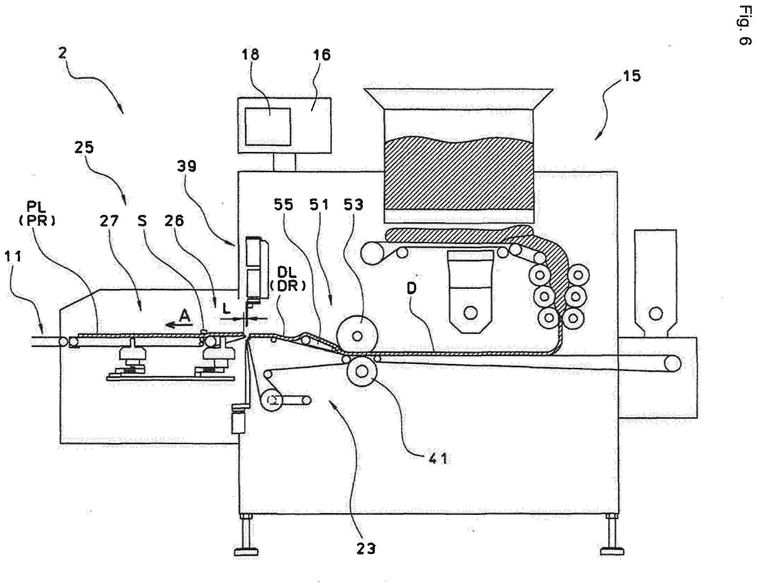

In the system 2 for weighing and cutting the continuous food dough shown in Figs. 6 and 7, which is a variation of the system 1, two units of the inlet conveyors 23, the weighing conveyor device 25, and the cutting apparatuses 39 are disposed in parallel with each other in the transverse direction. That means, in this system 2, the inlet conveyor 23 is replaced with the inlet conveyors 23L and 23R, the first weighing conveyor 26 is replaced with the first weighing conveyors 26L and 26R, the second weighing conveyor 27 is replaced the second weighing conveyors 27L and 27R, and the cutting apparatus 39 is replaced with the cutting apparatuses 39L and 39R.

Further, the system 2 for weighing and cutting the food dough has a roller conveyor 41 and a dividing and separating apparatus 51. The roller conveyor 41 is disposed adjacent to and at an upstream side, of the inlet conveyor 23. The dividing and separating apparatus 51 has a circular blade 53 and a dividing and separating conveyor 55. The circular blade 53 is disposed on the upper surface of the roller conveyor 41, and divides one row of the continuous food dough D into two rows of the continuous food dough DL and DR. Further, the dividing and separating conveyor 55 is disposed above the inlet conveyor 23, and carries the continuous food dough DL and DR to the inlet conveyors 23L and 23R, respectively.

The continuous food dough DL is processed by the inlet conveyor 23L, the first weighing conveyor 26L, the second weighing conveyor 27L, and the cutting apparatus 39L. Further, the continuous food dough DR is processed by the inlet conveyor 23R, the first weighing conveyor 26R, the second weighing conveyor 27R, and the cutting apparatus 39R. Two rows of the continuous food dough DL and DR are independently processed, and are cut into pieces PL and PR, respectively. Further, the moving distance L can be calculated by connecting the encoder 6d to the first weighing conveyor 26. The cutting apparatuses 39L and 39R have the same configuration as that of the cutting apparatus 29 previously explained, and each cutter blade 29a is disposed with a small interval along the transverse direction.

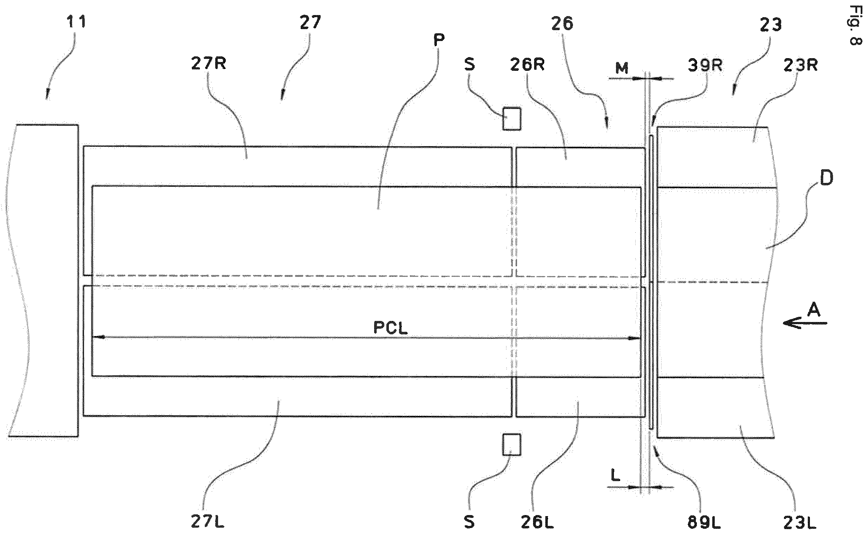

Fig. 8 shows the system 2 for weighing and cutting the food dough that cuts the piece P from one row of the continuous food dough D without using the dividing and separating apparatus 51. The continuous food dough D is placed on the first weighing conveyors 26L and 26R and the second weighing conveyors 27L and 27R at the same time, and the piece P of the food dough is cut out from the continuous food dough D by driving the cutting apparatuses 39L and 39R at the same time, when the weight W1 as a sum of the measurement of each weighing conveyor reaches to the predetermined cutting weight WS corresponding to the targeted cutting weight WT. Then, the actual weight WA of the piece P of the food dough is measured by the four weighing conveyors 26L, 26R, 27L, and 27R.

In the embodiments previously explained, the cutting apparatuses 9, 29, and 39 are driven, when the weight W1 of the continuous food dough D, DL, or DR reaches to the predetermined cutting weight WS. However, the method for cutting the continuous food dough is not limited to this configuration. For example, the cutting apparatuses 9, 29, and 39 may be driven after the passage of predetermined time from the time when the weight W1 of the continuous food dough D, DL, or DR reaches to the predetermined cutting weight WS. Further, for example, the cutting apparatuses may be periodically driven so that the cutting apparatuses are driven with a time interval T having a predetermined and fixed time. In this case, it is preferable that the velocities of the inlet conveyor, and the first and the second weighing conveyors are controlled so that the weight W1 of the continuous food dough D, DL, or DR becomes closer to the predetermined cutting weight WS, within
the fixed time interval T. Further, it is preferable that the weight W1 of the continuous food dough D, DL, or DR reaches to the predetermined cutting weight WS before the passage of the time interval T.

Further, in the embodiment previously explained, the cutting apparatus is disposed above the downstream end of the inlet conveyor, or above the position between the inlet conveyor and the weighing conveyor device. However, the cutting apparatus may be disposed above the upstream end of the first weighing conveyor. In this case, when the weight of the cut piece P of the food dough is measured by the first and the second weighing conveyors, the inlet conveyor is driven in the direction opposite to the carrying direction A of the food dough so that the continuous food dough D moves apart from the first weighing conveyor.

### Explanations of Denotations

- 1, 2: a system for weighing and cutting food dough
- 3, 23 (23L, 23R): an inlet conveyor
- 3a: a downstream end
- 5, 25: a weighing conveyor device
- 6, 26 (26L, 26R): a first weighing conveyor
- 6d: an encoder
- 7, 27 (27L, 27R): a second weighing conveyor
- 9, 29, 39 (39L, 39R): a cutting apparatus
- 11: an outlet conveyor
- 15: a feeding apparatus
- 16: a controller
- 18: an input device
- 41: a roller conveyor
- 51: a dividing and separating apparatus
- A: a carrying direction of food dough
- D: continuous food dough
- L: a moving distance
- M: an interval
- P, PL, PR: a piece of food dough
- PB: an upstream end of a piece of food dough
- PCL: a length of a piece of food dough
- SL: a threshold value
- V1: a forward-movement velocity
- V2: a moving-out velocity
- W1: a weight of continuous food dough measured by weighing conveyors
- WA: an actual weight of a piece of food dough
- WT: a targeted cutting weight
- WS: a predetermined cutting weight

## Claims

1. A system for weighing continuous food dough (1, 2) and for cutting it into pieces having a targeted weight, the system comprising:
an inlet conveyor (3, 23) for carrying forward the continuous food dough (D);
a weighing conveyor device (5, 25) disposed adjacent to and at a downstream side of the inlet conveyor (3, 23);
a cutting apparatus (9, 29, 39) for cutting out the pieces from the continuous food dough (D); and
a controller (16) connected to the inlet conveyor (3, 23), the weighing conveyor device (5, 25), and the cutting apparatus (9, 29, 39);
wherein the weighing conveyor device (5, 25) has a first weighing conveyor (6, 26) and a second weighing conveyor (7, 27) disposed adjacent to and at a downstream side of the first weighing conveyor (6, 26);
wherein the controller (16) is configured to measure a weight of the continuous food dough (D) being carried forward by the first and the second weighing conveyors (6, 26; 7, 27);
**characterized in that** the controller is further configured to measure, by means of the first and the second weighing conveyors (6, 26; 7, 27), an actual weight of the piece of the food dough (P) cut out from the continuous food dough (D).

2. The system for weighing and cutting food dough (1, 2) of claim 1, wherein the controller (16) is configured to stop the inlet conveyor (3, 23), and the first and the second weighing conveyors (6, 26; 7, 27) when the cutting apparatus (9, 29, 39) is operated.

3. The system for weighing and cutting food dough (1, 2) of claim 2, wherein the controller (16) is configured to stop the first and the second weighing conveyors (6, 26; 7, 27) when the actual weight of the piece of the food dough (P) is measured.

4. The system for weighing and cutting food dough (1, 2) of claim 3, wherein the controller (16) is configured to stop the first and the second weighing conveyors (6, 26; 7, 27) when an upstream end of the piece of the food dough (P) reaches to a boundary at an upstream side of the first weighing conveyor (6, 26).

5. The system for weighing and cutting food dough (1, 2) of claim 1, wherein the cutting apparatus (9, 29, 39) is disposed above a downstream end of the inlet conveyor (3, 23), or a position between the inlet conveyor (3, 23) and the weighing conveyor device (5, 25).

6. The system for weighing and cutting food dough (1, 2) of claim 5, wherein the controller (16) is configured to correct a predetermined cutting weight based on the actual weight of the piece of the food dough (P).

7. The system for weighing and cutting food dough (1, 2) of claim 6, wherein the controller (16) is configured to drive the cutting apparatus (9, 29, 39) based on the result of comparing the sum of the weights measured by the first and the second weighing conveyors (6, 26; 7, 27) with the predetermined cutting weight corresponding to the targeted cutting weight, or is configured to drive it with a predetermined time interval.

8. The system for weighing and cutting food dough (1, 2) of claim 7, wherein a plurality of the weighing conveyor devices (5, 25), having a set of the first and the second weighing conveyors (6, 26; 7, 27) are disposed in parallel in a transverse direction perpendicular to the carrying direction of the food dough (D).

9. A method for weighing continuous food dough (D) and for cutting it into pieces (P), using a system for weighing and cutting continuous food dough (1, 2), wherein the system has:
an inlet conveyor (3, 23) for carrying forward the continuous food dough (D);
a weighing conveyor device (5, 25) disposed adjacent to and at a downstream side of, the inlet conveyor (3, 23); and
a cutting apparatus (9, 29, 39) for cutting out the pieces (P) from the continuous food dough (D), wherein the cutting apparatus (9, 29, 39) is disposed at an upstream side of the weighing conveyor device (5, 25);
wherein the weighing conveyor device (5, 25) has a first weighing conveyor (6, 26) and a second weighing conveyor (7, 27) disposed adjacent to and at a downstream side of, the first weighing conveyor (6, 26);
the method comprising:
a step (1) for carrying the continuous food dough (D) onto the first and the second weighing conveyors (6, 26; 7, 27) by driving the inlet conveyor (3, 23), and the first and the second weighing conveyors (6, 26; 7, 27);
a step (2) for weighing the continuous food dough (D) by the first and the second weighing conveyors (6, 26; 7, 27);
a step (3) for cutting out a piece (P) from the continuous food dough (D) by the cutting apparatus (9, 29, 39) based on a measured weight of the continuous food dough (D); **characterized by**
a step (4) for weighing, by means of the first and the second weighing conveyors (6, 26; 7, 27), an actual weight of the piece (P) cut out from the continuous food dough (D).

10. The method for weighing and cutting food dough (D) of claim 9, comprising:
a step (3a) for cutting out a piece (P) from the continuous food dough (D) by the cutting apparatus (9, 29, 39) based on a measured weight of the continuous food dough (D), while stopping the movement of the inlet conveyor (3, 23), and the first and the second weighing conveyors (6, 26; 7, 27), as substitute for the step (3).

11. The method for weighing and cutting food dough (D) of claim 9, comprising:
a step (4a) for weighing an actual weight of the piece (P) cut out from the continuous food dough (D) by the first and the second weighing conveyors (6, 26; 7, 27), while stopping the movement of the inlet conveyor (3, 23), and the first and the second weighing conveyors (6, 26; 7, 27), as substitute for the step (4).

12. The method for weighing and cutting food dough (D) of claim 11, wherein the first and the second weighing conveyors (6, 26; 7, 27) are stopped when an upstream end of the piece of the food dough (P) reaches to a boundary at an upstream side of the first weighing conveyor (6, 26).

## Patentansprüche

1. System zum Wiegen eines fortlaufenden Speiseteigs (1, 2) und zum Schneiden desselben in Stücke, die ein Zielgewicht aufweisen, wobei das System umfasst:
einen Eingangsförderer (2, 23) zum Weiterführen des fortlaufenden Speiseteigs (D);
eine Wiegeförderervorrichtung (5, 25), die neben dem Eingangsförderer (3, 23) und an einer abfuhrseitigen Seite desselben angeordnet ist;
eine Schneidvorrichtung (9, 29, 39), die dazu eingerichtet ist, die Stücke aus dem -fortlaufenden Speiseteig (D) herauszuschneiden; und
eine Steuerung (16), die mit dem Eingangsförderer (3, 23), der Wiegeförderervorrichtung (5, 25) und der Schneidvorrichtung (9, 29, 39) verbunden ist;
wobei die Wiegeförderervorrichtung (5, 25) einen ersten Wiegeförderer (6, 26) und einen zweiten Wiegeförderer (7, 27) aufweist, der neben dem ersten Wiegeförderer (6, 26) an einer abfuhrseitigen Seite desselben angeordnet ist;
wobei die Steuerung (16) dazu eingerichtet ist, ein Gewicht des fortlaufenden Speiseteigs (D) zu messen, der von dem ersten und dem zweiten Wiegeförderer (6, 26; 7, 27) weitergeführt wird;
**dadurch gekennzeichnet, dass** die Steuerung ferner dazu eingerichtet ist, mittels des ersten und des zweiten Wiegeförderers (6, 26; 7, 27) ein tatsächliches Gewicht des Stücks des Speiseteigs (P) zu messen, das aus dem fortlaufenden Speiseteig (D) herausgeschnitten wurde.

2. System zum Wiegen und Schneiden eines Speiseteigs (1, 2) nach Anspruch 1, wobei die Steuerung (16) dazu eingerichtet ist, den Eingangsförderer (3, 23) sowie den ersten und den zweiten Wiegeförderer (6, 26; 7, 27) anzuhalten, wenn die Schneidvorrichtung (9, 29, 39) betrieben wird.

3. System zum Wiegen und Schneiden eines Speiseteigs (1, 2) nach Anspruch 2, wobei die Steuerung (16) dazu eingerichtet ist, den ersten und den zweiten Wiegeförderer (6, 26; 7, 27) anzuhalten, wenn das tatsächlich Gewicht des Stücks des Speiseteigs (P) gemessen wird.

4. System zum Wiegen und Schneiden eines Speiseteigs (1, 2) nach Anspruch 3, wobei die Steuerung (16) dazu eingerichtet ist, den ersten und den zweiten Wiegeförderer (6, 26; 7, 27) anzuhalten, wenn ein zufuhrseitiges Ende des Stücks des Speiseteigs (P) zu einer Begrenzung an einer zufuhrseitigen Seite des ersten Wiegeförderers (6, 26) reicht.

5. System zum Wiegen und Schneiden eines Speiseteigs (1, 2) nach Anspruch 1, wobei die Schneidvorrichtung (9, 29, 39) über einem abfuhrseitigen Ende des Eingangsförderers (3, 23) oder an einer Position zwischen dem Eingangsförderer (3, 23) und der Wiegeförderervorrichtung (5, 25) angeordnet ist.

6. System zum Wiegen und Schneiden eines Speiseteigs (1, 2) nach Anspruch 5, wobei die Steuerung (16) dazu eingerichtet ist, ein vorbestimmtes Schneidgewicht auf der Grundlage des tatsächlichen Gewichts des Stücks des Speiseteigs (P) zu korrigieren.

7. System zum Wiegen und Schneiden eines Speiseteigs (1, 2) nach Anspruch 6, wobei die Steuerung (16) dazu eingerichtet ist, die Schneidvorrichtung (9, 29, 39) auf der Grundlage des Ergebnisses eines Vergleichens der Summe der Gewichte, die von dem ersten und dem zweiten Wiegeförderer (6, 26; 7, 27) gemessen wurden, mit dem vorbestimmten Schneidgewicht, welches dem Zielschneidgewicht entspricht, zu betreiben oder dazu, sie mit einem vorbestimmten Zeitintervall zu betreiben.

8. System zum Wiegen und Schneiden eines Speiseteigs (1, 2) nach Anspruch 7, wobei mehrere der Wiegeförderervorrichtungen (5, 25), welche einen Satz des ersten und des zweiten Wiegeförderers (6, 26; 7, 27) aufweisen, in eine Querrichtung senkrecht zu der Förderrichtung des Speiseteigs (D) parallel zueinander angeordnet sind.

9. Verfahren zum Wiegen eines fortlaufenden Speiseteigs (1, 2) und zum Schneiden desselben in Stücke, die ein Zielgewicht aufweisen, wobei das System aufweist:
einen Eingangsförderer (2, 23) zum Weiterführen des fortlaufenden Speiseteigs (D);
eine Wiegeförderervorrichtung (5, 25), die neben dem Eingangsförderer (3, 23) und an einer abfuhrseitigen Seite desselben angeordnet ist;
eine Schneidvorrichtung (9, 29, 39), die dazu eingerichtet ist, die Stücke aus dem fortlaufenden Speiseteig (D) herauszuschneiden, wobei die Schneidvorrichtung (9, 29, 39) an einer zufuhrseitigen Seite der Wiegeförderervorrichtung (5, 25) angeordnet ist;
wobei die Wiegeförderervorrichtung (5, 25) einen ersten Wiegeförderer (6, 26) und einen zweiten Wiegeförderer (7, 27) aufweist, der neben dem ersten Wiegeförderer (6, 26) an einer abfuhrseitigen Seite desselben angeordnet ist;
wobei das Verfahren umfasst:
einen Schritt (1) zum Fördern des fortlaufenden Speiseteigs (D) auf den ersten und den zweiten Wiegeförderer (6, 26; 7, 27) durch Betreiben des Eingangsförderers (3, 23) sowie des ersten und des zweiten Wiegeförderers (6, 26; 7, 27);
einen Schritt (2) zum Wiegen des fortlaufenden Speiseteigs (D) durch den ersten und den zweiten Wiegeförderer (6, 26; 7, 27);
einen Schritt (3) zum Herausschneiden eines Stücks (P) aus dem fortlaufenden Speiseteig (D) durch die Schneidvorrichtung (9, 29, 39) auf der Grundlage eines gemessenen Gewichts des fortlaufenden Speiseteigs (D); **gekennzeichnet durch** einen Schritt (4) zum Wiegen eines tatsächlichen Gewichts des Stücks (P), das aus dem fortlaufenden Speiseteig (D) herausgeschnitten wurde, mittels des ersten und des zweiten Wiegeförderers (6, 26; 7, 27).

10. Verfahren zum Wiegen und Schneiden eines Speiseteigs (D) nach Anspruch 9, umfassend:
einen Schritt (3a) zum Herausschneiden eines Stücks (P) aus dem fortlaufenden Speiseteig (D) durch die Schneidvorrichtung (9, 29, 39) auf der Grundlage eines gemessenen Gewichts des fortlaufenden Speiseteigs (D), während die Bewegung des Eingangsförderers (3, 23) sowie des ersten und des zweiten Wiegeförderers (6, 26; 7, 27) angehalten wird, als Ersatz für den Schritt (3).

11. Verfahren zum Wiegen und Schneiden eines Speiseteigs (D) nach Anspruch 9, umfassend:
einen Schritt (4a) zum Wiegen eines tatsächlichen Gewichts des Stücks (P), das aus dem fortlaufenden Speiseteig (D) herausgeschnitten wurde, durch den ersten und den zweiten Wiegeförderer (6, 26; 7, 27), während die Bewegung des Eingangsförderers (3, 23) sowie des ersten und des zweiten Wiegeförderers (6, 26; 7, 27) angehalten wird, als Ersatz für den Schritt (4).

12. Verfahren zum Wiegen und Schneiden eines Speiseteigs (D) nach Anspruch 11, wobei der erste und der zweite Wiegeförderer (6, 26; 7, 27) gestoppt werden, wenn ein zufuhrseitiges Ende des Stücks des Speiseteigs (P) zu einer Begrenzung an einer zufuhrseitigen Seite des ersten Wiegeförderers (6, 26) reicht.

## Revendications

1. Système pour peser une pâte alimentaire continue (1, 2) et pour la découper en morceaux ayant un poids ciblé, le système comprenant :
un convoyeur d'entrée (3, 23) pour faire avancer la pâte alimentaire continue (D) ;
un dispositif convoyeur de pesage (5, 25) disposé de manière adjacente au convoyeur d'entrée (3, 23) et d'un côté aval de celui-ci ;
un appareil de découpe (9, 29, 39) pour découper les morceaux dans la pâte alimentaire continue (D) ; et
un dispositif de commande (16) connecté au convoyeur d'entrée (3, 23), au dispositif convoyeur de pesage (5, 25) et à l'appareil de découpe (9, 29, 39) ;
dans lequel le dispositif convoyeur de pesage (5, 25) comporte un premier convoyeur de pesage (6, 26) et un second convoyeur de pesage (7, 27) disposé de manière adjacente au premier convoyeur de pesage (6, 26) et d'un côté aval de celui-ci ; dans lequel le dispositif de commande (16) est conçu pour mesurer un poids de la pâte alimentaire continue (D) qui est transportée en avant par les premier et second convoyeurs de pesage (6, 26 ; 7, 27) ;
**caractérisé en ce que** le dispositif de commande est en outre conçu pour mesurer, au moyen des premier et second convoyeurs de pesage (6, 26 ; 7, 27), un poids réel du morceau de la pâte alimentaire (P) découpé dans la pâte alimentaire continue (D).

2. Système pour peser et découper de la pâte alimentaire (1, 2) selon la revendication 1, dans lequel le dispositif de commande (16) est conçu pour arrêter le convoyeur d'entrée (3, 23), et les premier et second convoyeurs de pesage (6, 26 ; 7, 27) lorsque l'appareil de découpe (9, 29, 39) est actionné.

3. Système pour peser et découper de la pâte alimentaire (1, 2) selon la revendication 2, dans lequel le dispositif de commande (16) est conçu pour arrêter les premier et second convoyeurs de pesage (6, 26 ; 7, 27) lorsque le poids réel du morceau de la pâte alimentaire (P) est mesuré.

4. Système pour peser et découper de la pâte alimentaire (1, 2) selon la revendication 3, dans lequel le dispositif de commande (16) est conçu pour arrêter les premier et second convoyeurs de pesage (6, 26 ; 7, 27) lorsqu'une extrémité amont du morceau de pâte alimentaire (P) atteint une limite située du côté amont du premier convoyeur de pesage (6, 26).

5. Système pour peser et découper de la pâte alimentaire (1, 2) selon la revendication 1, dans lequel l'appareil de découpe (9, 29, 39) est disposé au-dessus d'une extrémité aval du convoyeur d'entrée (3, 23), ou d'une position entre le convoyeur d'entrée (3, 23) et le dispositif convoyeur de pesage (5, 25).

6. Système pour peser et découper de la pâte alimentaire (1, 2) selon la revendication 5, dans lequel le dispositif de commande (16) est conçu pour corriger un poids de découpe prédéterminé sur la base du poids réel du morceau de pâte alimentaire (P).

7. Système pour peser et découper de la pâte alimentaire (1, 2) selon la revendication 6, dans lequel le dispositif de commande (16) est conçu pour entraîner l'appareil de découpe (9, 29, 39) sur la base du résultat de comparaison de la somme des poids mesurés par les premier et second convoyeurs de pesage (6, 26 ; 7, 27) avec le poids de découpe prédéterminé correspondant au poids de découpe ciblé, ou est conçu pour l'entraîner avec un intervalle de temps prédéterminé.

8. Système pour peser et découper de la pâte alimentaire (1, 2) selon la revendication 7, dans lequel une pluralité de dispositifs convoyeurs de pesage (5, 25), comportant un ensemble des premier et second convoyeurs de pesage (6, 26 ; 7, 27) sont disposés parallèlement dans une direction transversale perpendiculaire à la direction de transport de la pâte alimentaire (D).

9. Procédé pour peser de la pâte alimentaire continue (D) et pour la découper en morceaux (P), utilisant un système pour peser et découper de la pâte alimentaire continue (1, 2), dans lequel le système comprend :
un convoyeur d'entrée (3, 23) pour faire avancer la pâte alimentaire continue (D) ;
un dispositif convoyeur de pesage (5, 25) disposé de manière adjacente au convoyeur d'entrée (3, 23) et d'un côté aval de celui-ci ; et
un appareil de découpe (9, 29, 39) pour découper les morceaux (P) dans la pâte alimentaire continue (D), dans lequel l'appareil de découpe (9, 29, 39) est disposé d'un côté amont du dispositif convoyeur de pesage (5, 25) ;
dans lequel le dispositif convoyeur de pesage (5, 25) comporte un premier convoyeur de pesage (6, 26) et un second convoyeur de pesage (7, 27) disposé de manière adjacente au convoyeur de pesage (6, 26) et d'un côté aval de celui-ci ;
le procédé comprenant :
une étape (1) pour transporter la pâte alimentaire continue (D) sur les premier et second convoyeurs de pesage (6, 26 ; 7, 27) par entraînement du convoyeur d'entrée (3, 23), et des premier et second convoyeurs de pesage (6, 26 ; 7, 27) ;
une étape (2) pour peser la pâte alimentaire continue (D) au moyen des premier et second convoyeurs de pesage (6, 26 ; 7, 27) ;
une étape (3) pour découper un morceau (P) dans la pâte alimentaire continue (D) au moyen de l'appareil de découpe (9, 29, 39) sur la base d'un poids mesuré de la pâte alimentaire continue (D) ; **caractérisé par**
une étape (4) pour peser, au moyen des premier et second convoyeurs de pesage (6, 26 ; 7, 27), un poids réel du morceau (P) découpé dans la pâte alimentaire continue (D).

10. Procédé pour peser et découper de la pâte alimentaire (D) selon la revendication 9, comprenant :
une étape (3a) pour découper un morceau (P) dans la pâte alimentaire continue (D) au moyen de l'appareil de découpe (9, 29, 39) sur la base d'un poids mesuré de la pâte alimentaire continue (D), tout en arrêtant le mouvement du convoyeur d'entrée (3, 23), et des premier et second convoyeurs de pesage (6, 26 ; 7, 27), en remplacement de l'étape (3).

11. Procédé pour peser et découper de la pâte alimentaire (D) selon la revendication 9, comprenant :
une étape (4a) pour peser un poids réel du morceau (P) découpé dans la pâte alimentaire continue (D) au moyen des premier et second convoyeurs de pesage (6, 26 ; 7, 27), tout en arrêtant le mouvement du convoyeur d'entrée (3, 23), et des premier et second convoyeurs de pesage (6, 26 ; 7, 27), en remplacement de l'étape (4).

12. Procédé pour peser et découper de la pâte alimentaire (D) selon la revendication 11, dans lequel les premier et second convoyeurs de pesage (6, 26 ; 7, 27) sont arrêtés lorsqu'une extrémité amont du morceau de la pâte alimentaire (P) atteint une limite située d'un côté amont du premier convoyeur de pesage (6, 26).
